# EUROPÄISCHE PATENTANMELDUNG

(11) **EP 2 251 552 A1**
(43) Veröffentlichungstag der Anmeldung: **17.11.2010**
(21) Anmeldenummer: 09006516.0
(22) Anmeldetag: 14.05.2009
(51) Int. Cl.: F15B 13/04

(54) **Ventil**

(71) Anmelder: FESTO AG & Co. KG, 73734 Esslingen (DE)
(72) Erfinder: Kühbauch, Heiko, 73257 Köngen (DE); Kliem, Maik, 73760 Ostfildern (DE)
(74) Vertreter: Abel, Martin

(57) **Zusammenfassung**

Es wird ein Ventil (1) vorgeschlagen, das zwei in einer gemeinsamen Ventilkammer (12) angeordnete erste und zweite Ventilglieder (14, 15) aufweist, die jeweils alternativ in einer äußeren ersten Schaltstellung und in einer inneren zweiten Schaltstellung positionierbar sind. Je nachdem, in welcher Kombination die beiden Schaltstellungen der Ventilglieder (14, 15) vorliegen, kann ein erster Ventilkanal (10) bei gleichzeitiger Abtrennung von den jeweiligen anderen Ventilkanälen alternativ mit einem zweiten, einem dritten oder einem vierten Ventilkanal (20, 30, 40) verbunden werden.

## Beschreibung

Die Erfindung betrifft ein Ventil, mit einem ersten und einem zweiten Ventilglied, die axial aufeinanderfolgend und axial relativ zueinander bewegbar in einer gemeinsamen Ventilkammer angeordnet und jeweils axial zwischen einer außenliegenden ersten Schaltstellung und einer innenliegenden zweiten Schaltstellung umschaltbar sind, wobei das erste Ventilglied in seiner ersten Schaltstellung einen ersten Ventilkanal von einem zweiten Ventilkanal abtrennt und in seiner zweiten Schaltstellung den ersten Ventilkanal mit dem zweiten Ventilkanal verbindet, wobei ferner das zweite Ventilglied bei in der ersten Schaltstellung befindlichem ersten Ventilglied den ersten Ventilkanal mit einem dritten Ventilkanal verbindet, wenn es sich in der zweiten Schaltstellung befindet und den ersten Ventilkanal von dem dritten Ventilkanal abtrennt, wenn es sich in der ersten Schaltstellung befindet, und wobei außerdem ein durch mindestens eines der Ventilglieder steuerbarer vierter Ventilkanal vorhanden ist.

Ein derartiges Ventil ist aus der EP 0 663 532 A1 bekannt. Es verfügt dort über zwei axial aufeinanderfolgend in einer Ventilkammer angeordnete, als Ventilschieber ausgebildete Ventilglieder, die unabhängig voneinander zwischen jeweils einer ersten und einer zweiten Schaltstellung umschaltbar sind und die jeweils derart ausgebildet sind, dass sie eine 3/2-Wege-Ventilfunktion ausüben können. Beiden Ventilgliedern ist ein als Speisekanal nutzbarer erster Ventilkanal gemeinsam zugeordnet, der gleichzeitig oder alternativ mit einem von dem ersten Ventilglied kontrollierten zweiten Ventilkanal und/oder mit einem von dem zweiten Ventilglied kontrollierten dritten Ventilkanal verbindbar ist. Bei dem zweiten Ventilkanal und dem dritten Ventilkanal handelt es sich um einen Arbeitskanal. Jeder dieser Arbeitskanäle kann durch entsprechende Schaltstellung des zugeordneten Ventilgliedes alternativ zum Speisekanal mit einem als Entlüftungskanal fungierenden vierten Ventilkanal verbunden werden. Würde man sowohl den zweiten als auch den dritten Ventilkanal zur Einspeisung eines Druckmediums nutzen, bestünde die Möglichkeit, den ersten Ventilkanal durch wahlweises Verbinden mit dem zweiten oder dritten Ventilkanal mit unterschiedlichen Betriebsdrükken zu beaufschlagen.

Es existieren Anwendungsfälle für Fluidsteuerungen, bei denen ein und derselbe Verbraucher in einer gewissen Aufeinanderfolge mit wenigstens drei unterschiedlichen Betriebsdrücken zu versorgen ist, wobei es sich bei diesen Betriebsdrücken um atmosphärischen Überdruck oder um atmosphärischen Unterdruck bzw. Vakuum handeln kann. Ein solcher Anwendungsfall ist das pneumatisch gesteuerte Melken von Kühen, wo die Melkapparatur für optimale Anwendung wahlweise mit Atmosphärendruck und zwei unterschiedlich hohen Unterdrücken beaufschlagt werden sollte. Soweit der Anmelderin bekannt, werden dafür bisher stets mehrere Ventile gleichzeitig eingesetzt, die in aufeinander abgestimmte Weise betätigt werden. Der damit verbundene konstruktive und steuerungstechnische Aufbau ist sehr hoch.

Aufgabe der Erfindung ist es, Maßnahmen zu treffen, die auf einfache und kostengünstige Weise eine vielfältige Ansteuerung eines fluidischen Verbrauchers ermöglichen.

Zur Lösung dieser Aufgabe ist das Ventil derart ausgebildet, dass bei von beiden Ventilgliedern gleichzeitig eingenommener erster Schaltstellung eine Fluidverbindung zwischen dem ersten und dem vierten Ventilkanal hergestellt ist, die bei in der zweiten Schaltstellung befindlichem zweitem Ventilglied unterbrochen ist, derart, dass der erste Ventilkanal bei gleichzeitiger Abtrennung von den jeweiligen anderen Ventilkanälen alternativ mit dem zweiten, dritten oder vierten Ventilkanal verbindbar ist.

Das erfindungsgemäße Ventil schafft somit die Möglichkeit, ein und denselben Ventilkanal wahlweise mit drei verschiedenen Drücken zu beaufschlagen, die an den anderen drei Ventilkanälen angelegt werden. Der in dem ersten Ventilkanal vorherrschende und abgreifbare Druck bestimmt sich allein durch die relativ zueinander und relativ zur Ventilkammer eingenommene Schaltstellung der beiden Ventilglieder und kann folglich allein durch interne Fluidkanäle des Ventils bereitgestellt werden, ohne auf eine aufwändige externe Verschlauchung zurückgreifen zu müssen, wie sie erforderlich wäre, wenn man zum Erhalt des gleichen Ergebnisses auf mehrere einzelne Ventile zurückgreifen würde. Die Vereinigung der erfindungsgemäßen Funktionalität in einem einzigen Ventil ermöglicht auch die Einhaltung kompakter Abmessungen und eine kostengünstige Herstellung.

Vorteilhafte Weiterbildungen der Erfindung gehen aus den Unteransprüchen hervor.

Vorzugsweise sind die vier Ventilkanäle derart in einem Ventilgehäuse des Ventils verlaufend angeordnet, dass der erste und der vierte Ventilkanal bezogen auf die Längsrichtung der Ventilkammer axial zwischen dem zweiten und dem dritten Ventilkanal in die Ventilkammer einmünden. Die Zuordnung zu den anderen Ventilkanälen ist dabei so getroffen, dass der erste Ventilkanal an einer Stelle in die Ventilkammer einmündet, die zu dem zweiten Ventilkanal unmittelbar benachbart ist, während die Einmündung des vierten Ventilkanals axial benachbart zur Einmündung des dritten Ventilkanals stattfindet. Mit anderen Worten liegen also die Einmündungen des ersten und zweiten Ventilkanals einerseits und die Einmündungen des vierten und dritten Ventilkanals andererseits unmittelbar nebeneinander, wobei gleichzeitig die Einmündungen des ersten und vierten Ventilkanals nebeneinander angeordnet sind. Mit dieser Einmündungsreihenfolge lässt sich die erfindungsgemäße fluidische Verschaltung besonders leicht realisieren.

Die beiden Ventilglieder sind zweckmäßigerweise kolbenförmig ausgebildet, so dass sie in optimaler Weise in der Ventilkammer verschiebbar geführt angeordnet werden können.

Zweckmäßigerweise ist jedes Ventilglied durch Federmittel in eine Grundstellung vorgespannt, bei der es sich um die erste Schaltstellung handelt. Realisierbar wäre diese Vorspannung beispielsweise durch zwischen den Ventilgliedern wirksame Federmittel. Zweckmäßiger wird allerdings eine Anordnung angesehen, bei der jedem Ventilglied eigene Federmittel zugeordnet sind, die sich jeweils zwischen dem betreffenden Ventilglied und einem die Ventilkammer definierenden Gehäuse abstützen und die zweckmäßigerweise das jeweils zugeordnete Ventilglied koaxial umschließen.

Das Ventil ist zweckmäßigerweise als vorgesteuertes Ventil ausgebildet. Es enthält zu diesem Zweck eine Vorsteuerventileinrichtung, die es ermöglicht, jedes Ventilglied mittels Fluidkraft gesteuert in die gewünschte Schaltstellung zu verbringen.

Vorzugsweise erfolgt die Steuerung der Fluidströme innerhalb des Ventils ausschließlich durch Sitzventilstrukturen. Hierzu werden in der Ventilkammer ausgebildete Fluiddurchlässe insbesondere dadurch abwechselnd freigegeben oder verschlossen, dass sie von axial orientierten Ventilsitzen umgeben sind, die mit am zugeordneten Ventilglied angeordneten Sitzventilabschnitten kooperieren. Die Sitzventiltechnik hat den Vorteil, dass die Verschmutzungsanfälligkeit verglichen mit radial dichtenden Ventilschiebersystemen erheblich reduziert ist und auch eine diesbezüglich wesentlich höhere Schaltzeitkonstanz garantiert werden kann. Letzteres bedeutet, dass das Ventil kaum von Fertigungstoleranzen beeinflusst wird und auch ohne aufwändige Qualitätssicherungsmaßnahmen eine reproduzierbare Funktionalität gewährleistet werden kann.

Bei einer besonders zweckmäßigen Ausgestaltung mündet der erste Ventilkanal seitlich in einen ersten Ventilkammerabschnitt ein, der über einen von einem ihm axial zugewandten Ventilsitz umrahmten ersten Fluiddurchlass mit einem axial weiter außen liegenden zweiten Ventilkammerabschnitt verbunden ist, der mit dem zweiten Ventilkanal kommuniziert. Die Fluidverbindung zwischen dem ersten und dem zweiten Ventilkammerabschnitt wird hierbei durch einen an dem ersten Ventilglied angeordneten ersten Sitzventilabschnitt gesteuert, der mit einem bezüglich der Ventilkammer ortsfesten ersten Ventilsitz zusammenwirkt.

Der dritte Ventilkanal mündet in einen dritten Ventilkammerabschnitt ein, der zweckmäßigerweise über einen zweiten Fluiddurchlass mit einem sich zum anderen Ventilglied hin anschließenden weiteren Ventilkammerabschnitt verbunden ist, wobei dieser zweite Fluiddurchlass von einem zweiten Ventilsitz umrahmt ist. Die Fluidverbindung wird hier durch einen an dem zweiten Ventilglied angeordneten zweiten Sitzventilabschnitt gesteuert, der in dem weiteren Ventilkammerabschnitt angeordnet ist und mit einem ortsfest bezüglich der Ventilkammer angeordneten zweiten Ventilsitz zusammenwirkt.

Es ist zweckmäßig, die Anordnung so zu treffen, dass die beiden Ventilglieder in einem Fall, bei dem eines der Ventilglieder die zweite Schaltstellung einnimmt, derart miteinander gekoppelt sind, dass ein beide Ventilglieder durchsetzender Überbrückungskanal gebildet ist, der den vierten Ventilkammerabschnitt überbrückt und eine Fluidverbindung zwischen dem ersten Ventilkammerabschnitt und dem weiteren Ventilkammerabschnitt herstellt. Dieser Überbrückungskanal setzt sich aus Überbrückungskanalabschnitten beider Ventilglieder zusammen. Die Folge davon ist, dass der Überbrückungskanal im Bereich des vierten Ventilkammerabschnittes offen ist, wenn beide Ventilglieder die erste Schaltstellung einnehmen. In diesem Fall ergibt sich eine fluidische Verbindung zwischen dem vierten Ventilkammerabschnitt und dem ersten Ventilkammerabschnitt bei gleichzeitiger Abtrennung von dem dritten Ventilkammerabschnitt.

Bei einer solchen Bauform ist es von Vorteil, wenn der weitere Ventilkammerabschnitt ebenso wie der erste Ventilkammerabschnitt unabhängig von der Schaltstellung des jeweils zugeordneten Ventilgliedes bezüglich dem vierten Ventilkammerabschnitt ständig abgedichtet ist. Diese Abdichtung erfolgt zweckmäßigerweise nicht durch Sitzventilstrukturen, sondern durch Strukturen eines Schieberventils, indem ein gleitfähiges abdichtendes Zusammenwirken zwischen dem jeweiligen Ventilglied und einer die Ventilkammer umgrenzenden ortsfesten Begrenzungsfläche gegeben ist.

Besonders vorteilhaft ist eine Ausführungsform, bei der ein das erste Ventilglied durchsetzender erster Überbrückungskanalabschnitt einerseits ständig mit einem ersten Ventilkammerabschnitt verbunden ist, der mit dem ersten Ventilkanal kommuniziert, und der andererseits eine Kanalöffnung aufweist, die innerhalb eines mit dem vierten Ventilkanal kommunizierenden vierten Ventilkammerabschnittes liegt. Diese Kanalöffnung kommuniziert mit dem vierten Ventilkammerabschnitt, wenn beide Ventilglieder die erste Schaltstellung einnehmen, dient jedoch auch zur Verbindung mit einem das zweite Ventilglied durchsetzenden zweiten Überbrückungskanalabschnitt, wenn eines der Ventilglieder die zweite Schaltstellung einnimmt. Dieser zweite Überbrückungskanalabschnitt kommuniziert ständig mit einem weiteren Ventilkammerabschnitt, der zu einem mit dem dritten Ventilkanal kommunizierenden dritten Ventilkammerabschnitt benachbart ist und der unter Vermittlung einer dem zweiten Ventilglied zugeordneten Sitzventilstruktur in der zweiten Schaltstellung des zweiten Ventilgliedes mit dem dritten Ventilkammerabschnitt verbunden ist und der in der ersten Schaltstellung des zweiten Ventilgliedes von dem dritten Ventilkammerabschnitt abgetrennt ist.

Zur alternativen Trennung und Verbindung der beiden Überbrükkungskanalabschnitte verfügen die beiden Ventilglieder zweckmäßigerweise an ihren einander zugewandten Stirnflächen über Komponenten einer Sitzventilstruktur, die dichtend aneinander anliegen, wenn eines der Ventilglieder die zweite Schaltstellung einnimmt.

Die Kanalöffnung des ersten Überbrückungskanalabschnittes befindet sich zweckmäßigerweise an der dem zweiten Ventilglied zugewandten Stirnseite des ersten Ventilgliedes, wobei ihr eine weitere Kanalöffnung des zweiten Überbrückungskanalabschnittes gegenüberliegt, die an der zugewandten Stirnseite des zweiten Ventilgliedes ausgebildet ist. Die beiden Kanalöffnungen liegen sich somit insbesondere axial fluchtend gegenüber. Zur Abdichtung im aneinander anliegenden Zustand können die beiden Ventilglieder an ihren einander zugewandten Stirnseiten mit Komponenten einer Sitzventilstruktur versehen sein, die die Kanalöffnungen umschließen und die dichtend aneinander anliegen, wenn eines der Ventilglieder die zweite Schaltstellung einnimmt.

Nachfolgend wird die Erfindung anhand der beiliegenden Zeichnung näher erläutert. In dieser zeigen:
- Figur 1: einen Längsschnitt durch das erfindungsgemäße Ven- til in seinem Grundzustand,
- Figur 2: einen Längsschnitt durch das den Grundzustand ein- nehmende Ventil ohne Darstellung der zu seiner Be- tätigung dienenden Vorsteuerventileinrichtung,
- Figur 3: einen weiteren Betriebszustand des Ventils, in dem das erste Ventilglied die zweite Schaltstellung und das zweite Ventilglied die erste Schaltstellung einnimmt, und
- Figur 4: einen weiteren Betriebszustand des Ventils, bei dem das erste Ventilglied die erste Schaltstellung und das zweite Ventilglied die zweite Ventilstellung einnimmt.

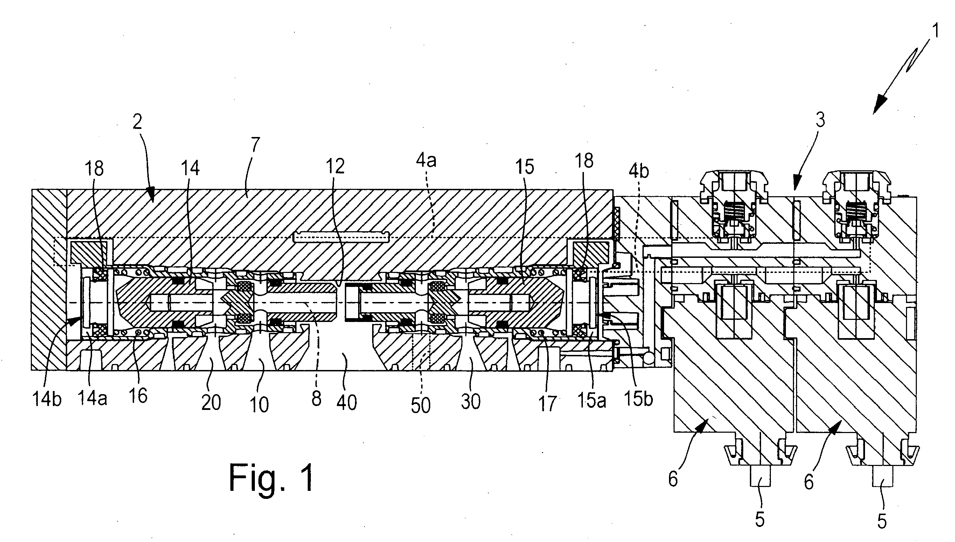

Das insgesamt mit Bezugsziffer 1 bezeichnete, in Figur 1 in seiner Gesamtheit abgebildete Ventil 1 ist vorzugsweise als elektropneumatisch vorgesteuertes Mehrwegeventil ausgebildet. Es verfügt über eine Hauptventileinrichtung 2 und eine insbesondere stirnseitig daran angesetzte Vorsteuerventileinrichtung 3. Die Vorsteuerventileinrichtung 3 kann über an elektrischen Anschlussmitteln 5 von außen her einspeisbare elektrische Steuersignale aktiviert werden, um in einen oder beide von zwei Vorsteuerkanälen 4a, 4b ein fluidisches Steuersignal auszugeben. Die beiden Vorsteuerkanäle 4a, 4b sind lediglich gestrichelt und auch nur in Figur 1 angedeutet. Die beiden Vorsteuerkanäle 4a, 4b sind unabhängig voneinander mit einem fluidischen Steuersignal beaufschlagbar, indem jedem Vorsteuerkanal 4a, 4b eine eigene elektrofluidische Vorsteuereinheit 6 zugeordnet ist, die in der Lage ist, den betreffenden Vorsteuerkanal 4a, 4b mit einem das fluidische Steuersignal liefernden Betätigungsfluid zu beaufschlagen oder druckmäßig zu entlasten. In der Regel wird Druckluft als Betätigungsfluid eingesetzt, es ist jedoch auch ein Betrieb mit einem anderen Druckgas oder mit einem flüssigen Druckmedium möglich.

Die beiden Vorsteuereinheiten 6 bestehen jeweils aus einem Vorsteuerventil, insbesondere ein Magnetventil oder ein Piezoventil mit jeweils 3/2-Wege-Ventilfunktion.

Die Hauptventileinrichtung 2 enthält ein Ventilgehäuse 7 mit einer Längsachse 8 und einer darin ausgebildeten, koaxial zu der Längsachse 8 angeordneten länglichen Ventilkammer 12. Die Ventilkammer 12 besteht aus einer länglichen bohrungsartigen Ausnehmung, in die exemplarisch von beiden Stirnseiten her unter partieller Abdichtung 9 je eine Hülsenanordnung 13 eingesetzt ist, welche bezüglich dem Ventilgehäuse 7 axial ortsfest fixiert ist. Beim Ausführungsbeispiel besteht die Ventilkammer 12 somit aus einem direkt von der Wandung der bohrungsartigen Ausnehmung gebildeten Mittelabschnitt und zwei sich axial beidseits daran anschließenden, vom Innenumfang der Hülsenanordnung 13 gebildeten Endabschnitten.

Die Hülsenanordnungen 13 dienen dazu, Komponenten noch zu erläuternder Sitzventilstrukturen in besonders einfacher Weise zu definieren und montieren zu können. Prinzipiell könnten diese Hülsenanordnungen 13 auch entfallen und die in sie integrierten Funktionalitäten auch in dem Ventilgehäuse 7 ausgebildet sein. Sofern also im Folgenden von Maßnahmen die Rede ist, die sich auf die Hülsenanordnungen 13 beziehen, ist dies so zu verstehen, dass die entsprechenden Maßnahmen auch direkt an dem Ventilgehäuse 7 ausgebildet sein könnten.

In die Ventilkammer 12 ist im Bereich des einen Endabschnittes ein bevorzug kolbenartig ausgebildetes erstes Ventilglied 14 eingesetzt. Ein zweckmäßigerweise ebenfalls kolbenartig aufgebautes zweites Ventilglied 15 befindet sich im entgegengesetzten anderen Endabschnitt der Ventilkammer 12. Beide Ventilglieder 14, 15 sitzen also in ein und derselben, entsprechend lang ausgebildeten Ventilkammer 12 und sind darin insbesondere unabhängig voneinander axial verschiebbar. Die Verschiebbarkeit ermöglicht ein Umschalten jedes Ventilgliedes 14, 15 zwischen einer ersten Schaltstellung und einer zweiten Schaltstellung. Die erste Schaltstellung ist dadurch charakterisiert, dass das betreffende Ventilglied 14, 15 innerhalb der Ventilkammer 12 axial weiter außen angeordnet ist als in der zweiten Schaltstellung, in der es axial weiter innen liegt. Das Umschalten in die erste Schaltstellung erfolgt also durch eine vom jeweils anderen Ventilglied weg orientierte axiale Linearbewegung. Beim Umschalten in die zweite Schaltstellung bewegt sich jedes Ventilglied in Richtung zum anderen Ventilglied.

Vorzugsweise nehmen beide Ventilglieder 14, 15 im deaktivierten Zustand eine von der ersten Schaltstellung gebildete Grundstellung ein. Der deaktivierte Zustand ist dadurch charakterisiert, dass das betreffende Ventilglied 14, 15 nicht mit einem fluidischen Steuersignal aus der Vorsteuerventileinrichtung 3 beaufschlagt ist. In diesem Fall ist eine Betätigungskammer 14a, 15a, an die jeweils einer der Vorsteuerkanäle 4a, 4b angeschlossen ist, durch entsprechenden Betriebszustand der Vorsteuerventileinrichtung 3 drucklos geschaltet.

An jedes Ventilglied 14, 15 schließt sich axial außen, an der dem anderen Ventilglied entgegengesetzten Seite, eine der Betätigungskammern 14a, 15a an, die vom dort liegenden äußeren Endbereich der Ventilkammer 12 gebildet ist. Jede Betätigungskammer 14a, 15a wird von einer vorzugsweise unmittelbar am zugeordneten Ventilglied 14, 15 ausgebildeten Betätigungsfläche 14b, 15b und im Übrigen vom Ventilgehäuse 7 begrenzt, so dass ein darin durch Anlegen eines fluidischen Steuersignals herrschender Betätigungsdruck in der Lage ist, das beaufschlagte erste oder zweite Ventilglied 14, 15 in die zweite Schaltstellung umzuschalten und dort festzuhalten. Durch Entfernen des fluidischen Steuersignals entfällt die Betätigungskraft und das betreffende Ventilglied 14, 15 kehrt in die erste Schaltstellung zurück.

Seine Eigenschaft als Grundstellung erfährt die erste Schaltstellung durch das Vorhandensein von dem ersten Ventilglied 14 zugeordneten ersten Federmitteln 16 und dem zweiten Ventilglied 15 zugeordneten zweiten Federmitteln 17. Diese Federmittel 16, 17, vorzugsweise jeweils als Schraubendruckfeder ausgebildet, sind zwischen dem zugeordneten Ventilglied 14, 15 und dem Ventilgehäuse 7 wirksam und spannen das Ventilglied 14, 15 ständig in Richtung der ersten Schaltstellung vor. Zugunsten einer kompakten Bauweise sitzen die Federmittel 16, 17 vorzugsweise koaxial auf dem zugeordneten Ventilglied 14, 15, wobei die Abstützung bezüglich des Ventilgehäuses 7 zweckmäßigerweise an der zugeordneten Hülsenanordnung 13 erfolgt. Letzteres ergibt sich dadurch, dass zweckmäßigerweise jedes Ventilglied 14, 15 in einer der beiden Hülsenanordnungen 13 axial gleitverschieblich angeordnet ist.

Die Innenumfangsfläche der Hülsenanordnung 13 bildet unter anderem auch eine Dichtfläche, an der ein am Ventilglied 14, 15 angeordneter Dichtungsring 18 gleitverschieblich anliegt, der die Betätigungskammer 14a, 15a von den axial weiter innen liegenden Bereichen der Ventilkammer 12 dichtend abtrennt.

Das Ventil 1 ist in der Lage, mehrere in seinem Innern ausgebildete Ventilkanäle in Abhängigkeit von der von den beiden Ventilgliedern 14, 15 eingenommenen Schaltstellung in unterschiedlicher Weise fluidisch miteinander zu verknüpfen. Es besteht insbesondere die Möglichkeit, einen ersten Ventilkanal 10 mit wahlweise einem zweiten Ventilkanal 20 oder einem dritten Ventilkanal 30 oder einem vierten Ventilkanal 40 fluidisch zu verbinden und dabei gleichzeitig von den anderen Ventilkanälen fluidisch abzutrennen. Auch die vom ersten Ventilkanal 10 jeweils abgetrennten Ventilkanäle stehen untereinander in keiner Fluidverbindung.

Diese Funktionalität ermöglicht mit nur einem Ventil eine sehr variable Ansteuerung eines an den ersten Ventilkanal 10 angeschlossenen Verbrauchers mit unterschiedlichen Fluiddrükken, die an die anderen drei Ventilkanäle 20, 30, 40 angelegt werden. Beispielsweise besteht die Möglichkeit, an einem der vorgenannten drei Ventilkahäle ein erstes Vakuum, an einem anderen dieser drei Ventilkanäle ein zweites Vakuum und am dritten dieser drei Ventilkanäle den atmosphärischen Druck anzulegen. Weitere Möglichkeiten bestehen im Anlegen von Vakuum/Überdruck/Atmosphärendruck oder erster Überdruck/zweiter Überdruck/atmosphärischer Druck oder drei verschiedene atmosphärische Überdrücke oder drei verschiedene atmosphärische Unterdrücke, also jeweils Vakuum.

Die vier Ventilkanäle 10, 20, 30, 40 münden in axial beabstandeten Bereichen insbesondere umfangsseitig in die Ventilkammer 12 ein. Der mit dem ersten Ventilkanal 10 ständig kommunizierende Längenabschnitt der Ventilkammer 12 sei als erster Ventilkammerabschnitt 10a bezeichnet. Die mit dem zweiten, dritten und vierten Ventilkanal 20, 30, 40 kommunizierenden Längenabschnitte der Ventilkammer 12 sind im Folgenden als zweiter Ventilkammerabschnitt 20a, dritter Ventilkammerabschnitt 30a und vierter Ventilkammerabschnitt 40a bezeichnet.

Diese vier Ventilkammerabschnitte sind mit einer dahingehenden Abfolge in der Ventilkammer 12 angeordnet, dass der erste Ventilkammerabschnitt 10a und der vierte Ventilkammerabschnitt 40a axial zwischen den außen liegenden zweiten und dritten Ventilkammerabschnitten 20a, 30a liegen. Beginnend mit dem einen, außenliegenden zweiten Ventilkammerabschnitt 20a sind die Ventilkammerabschnitte so verteilt, dass sich daran zunächst der erste Ventilkammerabschnitt 10a, dann der vierte Ventilkammerabschnitt 40a und letztlich der dritte Ventilkammerabschnitt 30a anschließt.

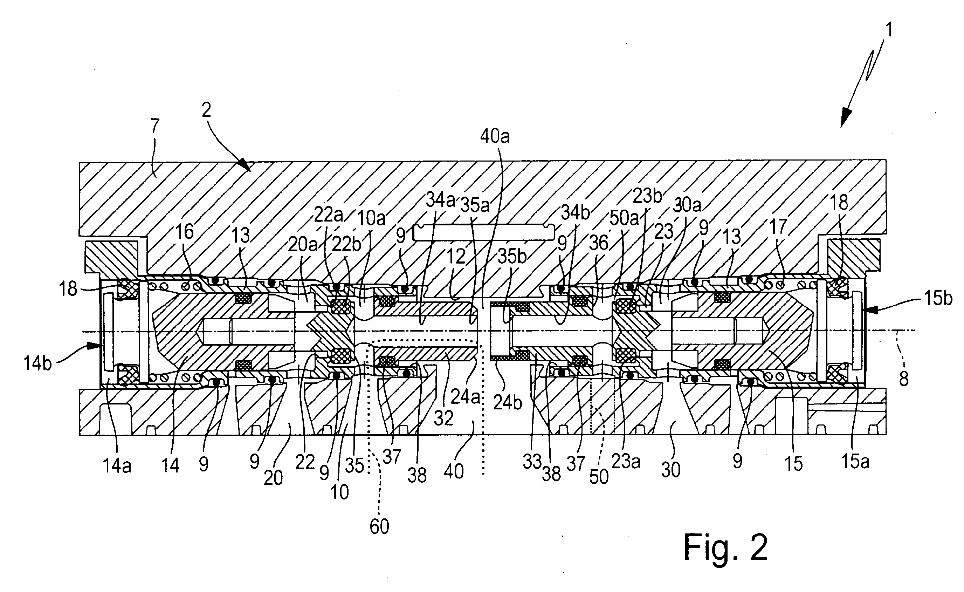

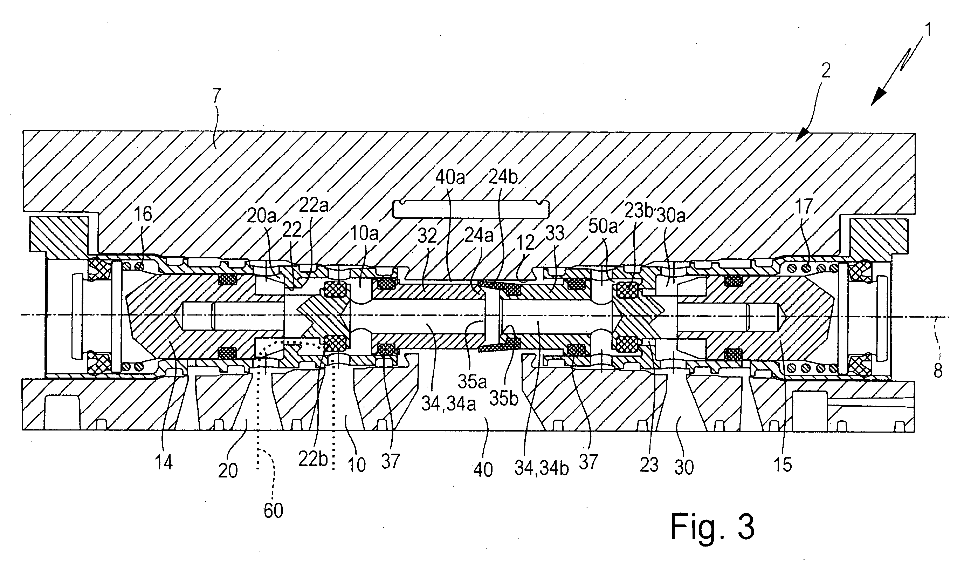

Wenn beide Ventilglieder 14, 15 die aus Figur 2 ersichtliche erste Schaltstellung einnehmen, steht der erste Ventilkanal 10 mit dem vierten Ventilkanal 40 in Fluidverbindung, indem die beiden Ventilglieder gemeinsam eine Fluidverbindung zwischen dem ersten Ventilkammerabschnitt 10a und dem vierten Ventilkammerabschnitt 40a freischalten. Durch Umschalten des ersten Ventilgliedes 14 in die zweite Schaltstellung trennt das erste Ventilglied 14 den ersten Ventilkanal 10 vom vierten Ventilkanal 40 ab und verbindet ihn stattdessen mit dem zweiten Ventilkanal 20. Indem gleichzeitig das zweite Ventilglied die erste Schaltstellung einnimmt, trennt dieses zweite Ventilglied den dritten Ventilkanal 30 von allen anderen Ventilkanälen ab. Somit erhält man ausschließlich eine Fluidverbindung zwischen dem ersten Ventilkanal 10 und dem zweiten Ventilkanal 20, wie dies aus Figur 3 ersichtlich ist.

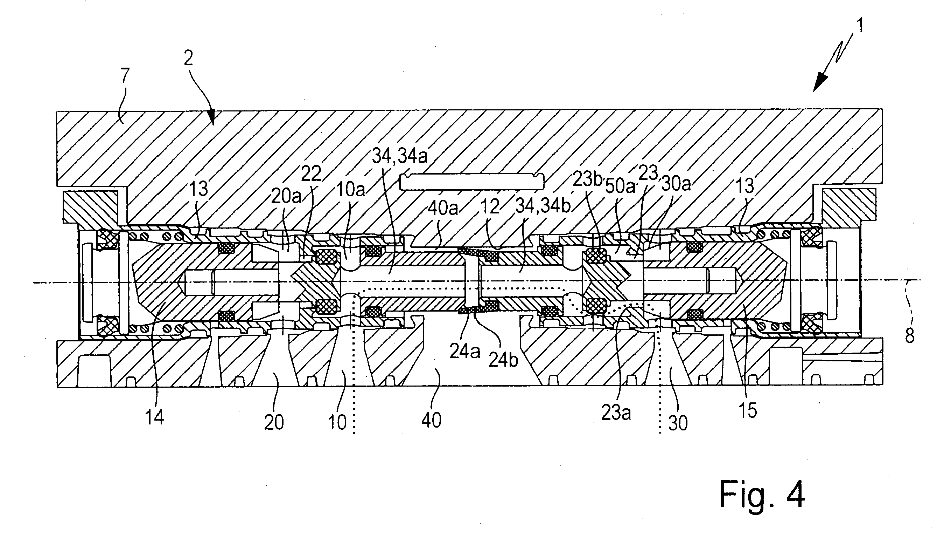

Positioniert man gemäß Figur 4 das erste Ventilglied 14 in der ersten Schaltstellung und das zweite Ventilglied 15 in der zweiten Schaltstellung, erhält man eine Fluidverbindung zwischen dem ersten Ventilkanal 10 und dem dritten Ventilkanal 30. Das erste Ventilglied 14 trennt hier den ersten Ventilkanal 10 wie auch schon gemäß Figur 2 vom zweiten Ventilkanal 20 ab und gleichzeitig gibt das zweite Ventilglied 15 die in der ersten Schaltstellung noch abgetrennte Verbindung zum ersten Ventilkanal 10 frei.

Eine gleichzeitige Positionierung beider Ventilglieder 14, 15 in der zweiten Schaltstellung ist auf Grund der speziellen Ausgestaltung der beiden Ventilglieder 14, 15 nicht möglich. Nimmt eines der Ventilglieder die zweite Schaltstellung ein, liegt es axial an dem die erste Schaltstellung einnehmenden anderen Ventilglied an, so dass dieses nicht in die zweite Schaltstellung umschaltbar ist. Es besteht jedoch durchaus die Möglichkeit, die beiden Ventilglieder jeweils simultan umzuschalten, wobei sie ihre gegenseitige axiale Anlage beibehalten.

Der erste und zweite Ventilkammerabschnitt 10a, 20a sind durch einen ringförmigen ersten Fluiddurchlass 22 miteinander verbunden, der konzentrisch zwischen der Hülsenanordnung 13 und dem ersten Ventilglied 14 ausgebildet ist. Dieser erste Fluiddurchlass 22 ist umrahmt von einem ringförmigen, axial dem ersten Ventilkammerabschnitt 10a zugewandten ersten Ventilsitz 22a. Im Innern des ersten Ventilkammerabschnittes 10a befindet sich ein von einem ringförmigen radialen Vorsprung des ersten Ventilgliedes 14 gebildeter erster Sitzventilabschnitt 22b, der zweckmäßigerweise von einem als Bestandteil des ersten Ventilgliedes 14 ausgeführten Dichtungsring gebildet ist. Der erste Ventilsitz 22a und der erste Sitzventilabschnitt 22b bilden gemeinsam eine eine erste Sitzventilstruktur, die es ermöglicht, den ersten Fluiddurchlass 22 zu steuern, indem dieser erste Fluiddurchlass 22 bei vom ersten Ventilsitz 22a abgehobenem erstem Sitzventilabschnitt 22b freigegeben ist und bei am ersten Ventilsitz 22a anliegendem erstem Sitzventilabschnitt 22b verschlossen ist. Der erste Sitzventilabschnitt 22b liegt in der ersten Schaltstellung des ersten Ventilgliedes 14 am ersten Ventilsitz 22a an und ist in der zweiten Schaltstellung von diesem ersten Ventilsitz 22a abgehoben.

Axial zwischen dem dritten Ventilkammerabschnitt 30a und dem vierten Ventilkammerabschnitt 40a befindet sich ein weiterer Ventilkammerabschnitt 50a, der im Folgenden der besseren Unterscheidung wegen als "Zwischenabschnitt 50a" bezeichnet sei. In diesem Zwischenabschnitt 50a befindet sich ein vergleichbar dem ersten Sitzventilabschnitt 22b ausgebildeter zweiter Sitzventilabschnitt 23b des zweiten Ventilgliedes 15, dem ein axial orientierter, ringförmiger zweiter Ventilsitz 23a zugewandt ist, der einen ringförmigen zweiten Fluiddurchlass 23 umrahmt, welcher den dritten Ventilkammerabschnitt 30a mit dem Zwischenabschnitt 50a verbindet.

Der zweite Ventilsitz 23a und der zweite Sitzventilabschnitt 23b bilden auch eine (zweite) Sitzventilstruktur, die in der schon erläuterten Weise arbeitet. In der ersten Schaltstellung ist somit der zweite Fluiddurchlass 23 durch den am zweiten Ventilsitz 23a anliegenden zweiten Sitzventilabschnitt 23b versperrt, während er in der zweiten Schaltstellung freigegeben ist.

Beide Ventilglieder 14, 15 weisen an den einander zugewandten Stirnseiten einen bevorzugt rohrförmigen Fortsatz auf, der im Falle des ersten Ventilgliedes 14 als erster Überbrückungsfortsatz 32 und im Falle des zweiten Ventilgliedes 15 als zweiter Überbrückungsfortsatz 33 bezeichnet sei. Die beiden Überbrückungsfortsätze 32, 33 ragen von einander entgegengesetzten Seiten her in den vierten Ventilkammerabschnitt 40a hinein und sind koaxial zueinander angeordnet.

Der erste Überbrückungsfortsatz 32 ist von einem als erster Überbrückungskanalabschnitt 34a bezeichneten Fluidkanal durchsetzt, der stirnseitig am freien Ende des ersten Überbrückungsfortsatzes 32 mit einer ersten Kanalöffnung 34b zum zweiten Überbrückungsfortsatz 33 hin ausmündet. Andererseits steht der erste Überbrückungskanalabschnitt 34a über mindestens eine Verbindungsöffnung 35 ständig mit dem ersten Ventilkammerabschnitt 10a in Verbindung. Selbige liegt innerhalb des ersten Ventilkammerabschnitts 10a am Außenumfang des ersten Ventilgliedes 14.

Der zweite Überbrückungsfortsatz 33 ist von einem zweiten Überbrückungskanalabschnitt 34b durchsetzt, der mit einer mit der ersten Kanalöffnung 34b axial fluchtenden zweiten Kanalöffnung 35b an der dem ersten Ventilglied 14 zugewandten Stirnseite des zweiten Überbrückungsfortsatzes 33 ausmündet. Andererseits kommuniziert der zweite Überbrückungskanalabschnitt 34b ständig mit dem Zwischenabschnitt 50a, und zwar über mindestens eine radial orientierte Verbindungsöffnung 36 hinweg, die innerhalb des Zwischenabschnittes 50a am Außenumfang des zweiten Ventilgliedes 15 angeordnet ist.

Abgesehen von den beiden Überbrückungskanalabschnitten 34a, 34b sind der erste Ventilkammerabschnitt 10a und der Zwischenabschnitt 50a unabhängig von den Schaltstellungen der beiden Ventilglieder 14, 15 ständig zu dem axial zwischen ihnen liegenden vierten Ventilkammerabschnitt 40a abgedichtet. Hierzu tragen beide Ventilglieder 14, 15 im Übergangsbereich zu Ihrem Überbrückungsfortsatz 32, 33 am Außenumfang einen Dichtungsring 37, der gleitverschieblich mit der die Ventilkammer 12 umgrenzenden Umfangsfläche 37 in Dichtkontakt steht. Beim Ausführungsbeispiel ist die Umfangsfläche 37 von der Innenfläche der jeweils zugeordneten Hülsenanordnung 13 gebildet.

An ihren einander zugewandten Stirnseiten weisen die beiden Überbrückungsfortsätze 32, 33 Komponenten einer dritten Sitzventilstruktur auf, die beim Ausführungsbeispiel aus einem die erste Kanalöffnung 34b umrahmenden dritten Ventilsitz 24a und einer am zweiten Überbrückungsfortsatz 33 angeordneten Dichtungsmanschette 24b bestehen. Die Dichtungsmanschette 24b umschließt die zweite Kanalöffnung 35b und steht über den zweiten Überbrückungsfortsatz 33 vor, wobei sie radial aufweitbar ist. Sie kann insbesondere aus Material mit gummielastischen Eigenschaften bestehen.

Wenn beide Ventilglieder 14, 15 die aus Figur 2 ersichtliche erste Schaltstellung einnehmen, sind die beiden Überbrükkungsfortsätze 32, 33 voneinander getrennt und jede Kanalöffnung 34b, 35b kommuniziert direkt mit dem vierten Ventilkammerabschnitt 40a.

Nimmt hingegen gemäß Figuren 3 und 4 das eine oder andere Ventilglied 14, 15 die zweite Schaltstellung ein, sind die beiden Überbrückungsfortsätze 32, 33 so weit aneinander angenähert, dass die dritte Sitzventilstruktur aktiv ist und die beiden Kanalöffnungen 34b, 35b unter Abtrennung vom vierten Ventilkammerabschnitt 40a fluidisch miteinander verbindet, so dass sich die beiden Überbrückungskanalabschnitte 34a, 34b zu einem den vierten Ventilkammerabschnitt 40a überbrückenden Verbindungskanal 34 ergänzen, der im Folgenden als Überbrükkungskanal bezeichnet wird. Die Abdichtung bezüglich dem vierten Ventilkammerabschnitt 40a erfolgt beispielsgemäß dadurch, dass die Dichtungsmanschette 24b unter geringfügiger Aufweitung und folglich daraus resultierender Vorspannung auf den bevorzugt konisch ausgebildeten dritten Ventilsitz 24a aufgeschoben ist.

Das abdichtende Verbinden zwischen den beiden Überbrückungsfortsätzen 32, 33 ist nicht zwingend mittels einer Sitzventilstruktur zu realisieren, sondern kann auch durch andere Abdichtmittel verwirklicht werden, beispielsweise dahingehend, dass der jeweils eine Überbrückungsfortsatz unter Abdichtung gleitverschieblich in den anderen Überbrückungsfortsatz eintaucht.

Der durch das Koppeln der beiden Ventilglieder 14, 15 erzeugte Überbrückungskanal 34 stellt eine Fluidverbindung zwischen dem ersten Ventilkammerabschnitt 10a und dem Zwischenabschnitt 50a her.

Im Folgenden sollen nochmals zusammengefasst die möglichen Betriebszustände des Ventils erläutert werden, wobei die gepunktete Linie 60 die jeweils freigeschaltete Fluidverbindung zeigt, also den zum ersten Ventilkanal 10 hin freigeschalteten Strömungspfad.

In dem aus Figur 2 ersichtlichen Betriebszustand sind die beiden Ventilglieder 14, 15 auf Grund beiderseitiger Einnahme der ersten Schaltstellung voneinander entkoppelt und beide Überbrückungskanalabschnitte 34a, 34b kommunizieren mit dem vierten Ventilkanal 40. Dabei ist der zweite Überbrückungskanalabschnitt 34b wirkungslos. Der mit ihm kommunizierende Zwischenabschnitt 50a ist von dem dritten Ventilkammerabschnitt 30a und somit vom dritten Ventilkanal 30 abgetrennt, weil die zweite Sitzventilstruktur 23a, 23b die Schließstellung einnimmt.

Hingegen ist der erste Überbrückungskanalabschnitt 34a wirksam. Über ihn hinweg erfolgt eine Fluidverbindung zwischen dem vierten Ventilkanal 40 und dem ersten Ventilkanal 10. Der zweite Ventilkanal ist auf Grund der in Schließstellung befindlichen ersten Sitzventilstruktur 22a, 22b vom ersten Ventilkanal 10 abgetrennt.

In dem Betriebszustand gemäß Figur 3 ist der zweite Fluiddurchlass 22 offen und dadurch der erste Ventilkanal 10 mit dem zweiten Ventilkanal 20 verbunden. Darüber hinaus kommuniziert der erste Ventilkammerabschnitt 10a zwar über den hergestellten Überbrückungskanal 34 hinweg auch mit dem Zwischenabschnitt 50a. Da dieser jedoch sowohl mittels des Dichtungsringes 37 vom vierten Ventilkammerabschnitt 40a als auch mittels der geschlossenen zweiten Sitzventilstruktur 23a, 23b vom dritten Ventilkammerabschnitt 30a abgetrennt ist, ist er funktionslos. Die wirksame dritte Sitzventilstruktur 34a, 34b verhindert eine direkte Verbindung des ersten Überbrückungskanalabschnittes 34a mit dem vierten Ventilkanal 40.

In dem aus Figur 4 ersichtlichen Betriebszustand schließlich ist der Überbrückungskanal 34 wirksam. Hier ist der erste Ventilkanal 10 auf Grund abgesperrtem erstem Fluiddurchlass 22 vom zweiten Ventilkanal 20 abgetrennt und zugleich auch vom vierten Ventilkanal 40, weil die dritte Sitzventilstruktur 24a, 24b wirksam ist. Hingegen ist die Verbindung des ersten Ventilkanals 10 zum dritten Ventilkanal 30 freigeschaltet, weil der mit dem Überbrückungskanal 34 kommunizierende Zwischenabschnitt 50a durch den freigegebenen zweiten Fluiddurchlass 23 hindurch mit dem dritten Ventilkammerabschnitt 30a in Fluidverbindung steht.

Optional besteht auch noch die Möglichkeit, einen in Figur 2 gestrichelt angedeuteten fünften Ventilkanal 50 vorzusehen, der mit dem Zwischenabschnitt 50a kommuniziert und optional nutzbar ist.

Das Ventil 1 kann auch so genutzt werden, dass in den ersten Ventilkanal 10 ein Druckmedium eingespeist wird, das dann je nach Betriebszustand zu wahlweise einem der anderen drei Ventilkanäle ausgegeben werden kann.

## Patentansprüche

1. Ventil, mit einem ersten und einem zweiten Ventilglied (14, 15), die axial aufeinanderfolgend und axial relativ zueinander bewegbar in einer gemeinsamen Ventilkammer (12) angeordnet und jeweils axial zwischen einer außenliegenden ersten Schaltstellung und einer innenliegenden zweiten Schaltstellung umschaltbar sind, wobei das erste Ventilglied (14) in seiner ersten Schaltstellung einen ersten Ventilkanal (10) von einem zweiten Ventilkanal (20) abtrennt und in seiner zweiten Schaltstellung den ersten Ventilkanal (10) mit dem zweiten Ventilkanal (20) verbindet, wobei ferner das zweite Ventilglied (15) bei in der ersten Schaltstellung befindlichem ersten Ventilglied (14) den ersten Ventilkanal (10) mit einem dritten Ventilkanal (30) verbindet, wenn es sich in der zweiten Schaltstellung befindet und den ersten Ventilkanal (10) von dem dritten Ventilkanal (30) abtrennt, wenn es sich in der ersten Schaltstellung befindet, und wobei außerdem ein durch mindestens eines der Ventilglieder (14, 15) steuerbarer vierter Ventilkanal (40) vorhanden ist, **dadurch gekennzeichnet, dass** bei von beiden Ventilgliedern (14, 15) gleichzeitig eingenommener erster Schaltstellung eine Fluidverbindung zwischen dem ersten und dem vierten Ventilkanal (10, 40) hergestellt ist, die bei in der zweiten Schaltstellung befindlichem zweiten Ventilglied (15) unterbrochen ist, derart, dass der erste Ventilkanal (10) bei gleichzeitiger Abtrennung von den jeweiligen anderen Ventilkanälen alternativ mit dem zweiten, dritten oder vierten Ventilkanal (20, 30, 40) verbindbar ist.

2. Ventil nach Anspruch 1, **dadurch gekennzeichnet, dass** der erste und der vierte Ventilkanal (10, 40) bezogen auf die Längsachse (8) der Ventilkammer (12) axial zwischen dem zweiten und dem dritten Ventilkanal (20, 30) in die Ventilkammer (12) einmünden, wobei der erste Ventilkanal (10) axial beabstandet zu dem zweiten Ventilkanal (20) und der vierte Ventilkanal (40) axial beabstandet zu dem dritten Ventilkanal (30) in die Ventilkammer (12) einmündet.

3. Ventil nach Anspruch 1 oder 2, **dadurch gekennzeichnet, dass** die beiden Ventilglieder (14, 15) kolbenförmig ausgebildet sind.

4. Ventil nach einem der Ansprüche 1 bis 3, **dadurch gekennzeichnet, dass** beide Ventilglieder (14, 15) durch Federmittel (16, 17) in die als Grundstellung fungierende erste Schaltstellung vorgespannt sind, wobei zweckmäßigerweise jedem Ventilglied (14, 15) eigene Federmittel (16, 17) zugeordnet sind, die insbesondere in einer das zugeordnete Ventilglied (14, 15) koaxial umschließenden Weise angeordnet sind.

5. Ventil nach einem der Ansprüche 1 bis 4, **dadurch gekennzeichnet, dass** es mit einer Vorsteuerventileinrichtung (3) zum durch Fluidkraft hervorrufbaren Umschalten jedes Ventilgliedes (14, 15) ausgestattet ist.

6. Ventil nach einem der Ansprüche 1 bis 5, **dadurch gekennzeichnet, dass** in der Ventilkammer (12) zur Steuerung der Fluidverbindung zwischen den Ventilkanälen (10, 20, 30, 40) abwechselnd verschließbare und freigebbare Fluiddurchlässe (22, 23) angeordnet sind, wobei jedem dieser Fluiddurchlässe zu seiner Steuerung ausschließlich eine Sitzventilstruktur zugeordnet ist.

7. Ventil nach Anspruch 6, **dadurch gekennzeichnet, dass** sämtlichen steuerbaren Fluiddurchlässen (22, 23) jeweils eine Sitzventilstruktur zugeordnet ist.

8. Ventil nach einem der Ansprüche 1 bis 7, **dadurch gekennzeichnet, dass** der erste Ventilkanal (10) seitlich in einen ersten Ventilkammerabschnitt (10a) einmündet, der über einen von einem ihm axial zugewandten ersten Ventilsitz (22a) umrahmten ersten Fluiddurchlass (22) mit einem axial weiter außen liegenden und mit dem zweiten Ventilkanal (20) kommunizierenden zweiten Ventilkammerabschnitt (20a) verbunden ist, wobei diese Verbindung durch einen in dem ersten Ventilkammerabschnitt (10a) angeordneten und mit dem ersten Ventilsitz (22a) kooperierenden ersten Sitzventilabschnitt (22b) des ersten Ventilgliedes (14) steuerbar ist.

9. Ventil nach Anspruch 8, **dadurch gekennzeichnet, dass** der dritte Ventilkanal (30) in einen dritten Ventilkammerabschnitt (30a) einmündet, der über einen von einem ihm axial abgewandten, nach axial innen weisenden zweiten Ventilsitz (23a) umrahmten zweiten Fluiddurchlass (23) mit einem sich axial innen anschließenden weiteren Ventilkammerabschnitt (50a) verbunden ist, wobei diese Verbindung durch einen in dem weiteren Ventilkammerabschnitt (50a) angeordneten und mit dem zweiten Ventilsitz (23a) kooperierenden zweiten Sitzventilabschnitt (23b) des zweiten Ventilgliedes (15) steuerbar ist.

10. Ventil nach Anspruch 9, **dadurch gekennzeichnet, dass** die beiden Ventilglieder (14, 15) bei Einnahme der zweiten Schaltstellung eines Ventilgliedes (14, 15) derart miteinander gekoppelt sind, dass ein beide Ventilglieder (14, 15) durchsetzender Überbrückungskanal (34) unter Überbrückung des vierten Ventilkammerabschnittes (40a) eine Fluidverbindung zwischen dem weiteren Ventilkammerabschnitt (50a) und dem ersten Ventilkammerabschnitt (10a) herstellt, wobei die Kopplung der beiden Ventilglieder (14, 15) derart lösbar ausgebildet ist, dass der Überbrückungskanal (34) im Bereich des vierten Ventilkammerabschnittes (40a) offen ist, wenn beide Ventilglieder (14, 15) ihre erste Schaltstellung einnehmen, so dass der vierte Ventilkammerabschnitt (40a) bei gleichzeitiger Abtrennung von dem dritten Ventilkammerabschnitt (30a) mit dem ersten Ventilkammerabschnitt (10a) verbunden ist.

11. Ventil nach Anspruch 10, **dadurch gekennzeichnet, dass** der weitere Ventilkammerabschnitt (50a) und der erste Ventilkammerabschnitt (10a) unabhängig von der Schaltstellung der Ventilglieder (14, 15) durch gleitfähiges abdichtendes Zusammenwirken zwischen jedem Ventilglied (14, 15) und einer die Ventilkammer (12) umgrenzenden ortsfesten Umfangsfläche (38) gegenüber dem vierten Ventilkammerabschnitt (40a) ständig abgedichtet ist.

12. Ventil nach einem der Ansprüche 1 bis 11, **dadurch gekennzeichnet, dass** ein das erste Ventilglied (14) durchsetzender erster Überbrückungskanalabschnitt (34a) einerseits ständig mit einem mit dem ersten Ventilkanal (10) kommunizierenden ersten Ventilkammerabschnitt (10a) verbunden ist und andererseits eine innerhalb eines mit dem vierten Ventilkanal (40) kommunizierenden vierten Ventilkammerabschnittes (40a) liegende Kanalöffnung (35b) aufweist, die mit dem vierten Ventilkammerabschnitt (40a) kommuniziert, wenn beide Ventilglieder (14, 15) die erste Schaltstellung einnehmen, und über die bei gleichzeitiger Abtrennung von dem vierten Ventilkammerabschnitt (40a) eine Fluidverbindung mit einem das zweite Ventilglied (15) durchsetzenden zweiten Überbrückungskanalabschnitt (34b) hergestellt ist, wenn eines der Ventilglieder (14, 15) die zweite Schaltstellung einnimmt, wobei der zweite Überbrückungskanalabschnitt (34b) ständig mit einem benachbart zu einem mit dem dritten Ventilkanal (30) kommunizierenden dritten Ventilkammerabschnitt (30a) angeordneten weiteren Ventilkammerabschnitt (50a) verbunden ist, der unter Vermittlung einer dem zweiten Ventilglied (15) zugeordneten Sitzventilstruktur (23a, 23b) in der zweiten Schaltstellung des zweiten Ventilgliedes (15) mit dem dritten Ventilkammerabschnitt (30a) verbunden ist und in der ersten Schaltstellung des zweiten Ventilgliedes (15) von dem dritten Ventilkammerabschnitt (30a) abgetrennt ist.

13. Ventil nach Anspruch 12, **dadurch gekennzeichnet, dass** die Kanalöffnung (35a) an der dem zweiten Ventilglied (15) zugewandten Stirnseite des ersten Ventilgliedes (14) angeordnet ist und ihr eine an der zugewandten Stirnseite des zweiten Ventilgliedes (15) ausgebildete weitere Kanalöffnung (35b) des zweiten Überbrückungskanalabschnittes (34b) gegenüberliegt.

14. Ventil nach Anspruch 13, **dadurch gekennzeichnet, dass** die beiden Ventilglieder (14, 15) an ihren einander zugewandten Stirnseiten mit die Kanalöffnungen (35a, 35b) umschließenden Komponenten (24a, 24b) einer Sitzventilstruktur versehen sind, die dichtend aneinander anliegen, wenn eines der Ventilglieder (14, 15) die zweite Schaltstellung einnimmt.

15. Ventil nach einem der Ansprüche 12 bis 14, **dadurch gekennzeichnet, dass** in den weiteren Ventilkammerabschnitt (50a) ein optional nutzbarer fünfter Ventilkanal (50) einmündet.
